# EUROPÄISCHE PATENTSCHRIFT

(11) **EP 2 162 646 B1**
(45) Veröffentlichungstag und Bekanntmachung des Hinweises auf die Patenterteilung: **26.10.2011**
(21) Anmeldenummer: 08749007.4
(22) Anmeldetag: 19.04.2008
(51) Int. Cl.: F16H 59/02, G05G 25/02

(54) **SCHALTKNAUF FÜR EINEN SCHALTHEBEL EINES FAHRZEUGGETRIEBES**
A GEAR KNOB FOR A GEAR LEVER OF A VEHICLE TRANSMISSION
POMMEAU POUR LEVIER DE CHANGEMENT DE VITESSE DE TRANSMISSION D'AUTOMOBILE

(30) Priorität: 22.05.2007 DE 102007023733
(43) Veröffentlichungstag der Anmeldung: 17.03.2010
(73) Patentinhaber: AUDI AG, 85045 Ingolstadt (DE); Hkr Haas Gmbh + Co. Kunststoff Kg, 91244 Reichenschwand (DE)
(72) Erfinder: HASS, Reimer, 85049 Ingolstadt (DE); SZIKAL, Wilhelm, 91207 Lauf (DE)
(74) Vertreter: Mader, Wilfried
(86) Internationale Anmeldenummer: PCT/EP2008/003167
(87) Internationale Veröffentlichungsnummer: WO 2008/141708

(56) Entgegenhaltungen:
- WO-A-02/01093
- DE-U1- 20 108 566
- GB-A- 1 279 914
- JP-A- 11 115 524
- JP-A- 2007 008 347

## Beschreibung

Die Erfindung betrifft einen Schaltknauf für einen Schalthebel eines Fahrzeuggetriebes nach dem Oberbegriff des Patentanspruchs 1.

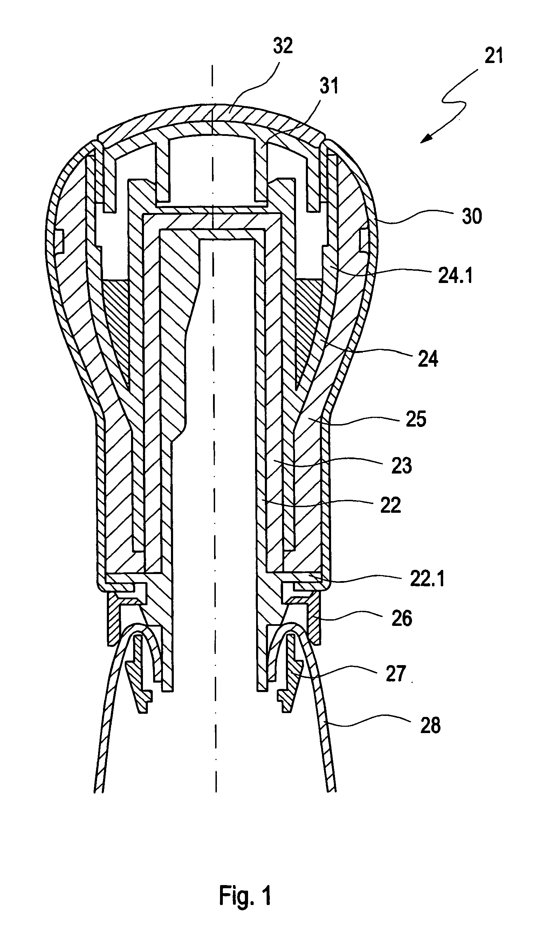

Ein herkömmlicher Schaltknauf ist in Fig. 1 dargestellt und ist beispielsweise aus Serienfahrzeugen der Anmelderin bekannt. Wie aus Fig. 1 ersichtlich ist, umfasst der herkömmliche Schaltknauf 21 für einen Schalthebel eines Fahrzeuggetriebes ein im Wesentlichen rohrförmiges Schaltknaufkernstück 22, das ein nicht dargestelltes Freiende des Schalthebels aufnimmt, und eine Schaltknauftulpe 24, die zur akustischen Entkopplung von dem Schaltknopfkernstück 22 durch eine erste Weichkomponente 23 vom Schaltknaufkernstück 22 getrennt ist. Durch die erste Weichkomponente 23 wird die Schallübertragung von der Schaltung über den Schalthebel und den Schaltknauf 21 in den Fahrzeuginnenraum gedämpft. Zwischen der Schaltknauftulpe 24 und einer im Griffbereich des Schaltknaufes 21 angeordneten Bezugsschicht 30 ist eine zweite Weichkomponente 25 angeordnet, die haptische Eigenschaften aufweist, die ein Benutzer in der Regel als angenehm empfindet. Die erste Weichkomponente 23 und die zweite Weichkomponente 25 können, wenn die beiden Weichkomponenten 23, 25 aus dem gleichen Material bestehen, in einem Spritzvorgang gefertigt werden und sind nach unten durch einen an den Außenumfang des Schaltknaufkernstücks 22 angeformten Flansch 22.1 begrenzt, der sich radial nach außen erstreckt, wobei die auf die zweite Weichkomponente 25 aufgebrachte Bezugsschicht 30 an der Unterseite des Flansches 22.1 umlaufend verklebt ist. Am anderen Ende ist die Bezugsschicht 30 mit einer Innenfläche eines äußeren Kelchs 24.1 der Schaltknauftulpe 24 umlaufend verklebt. Nach oben ist der Schaltknauf 21 durch eine eingesteckte Kappe 31 abgeschlossen, auf die ein Zierelement 32 aufgeklebt werden kann, das bündig mit dem äußeren Kelch 24.1 der Schaltkauftulpe 24 und der mit der Schaltknauftulpe 24 verklebten Bezugsschicht 30 abschließt. Wie weiter aus Fig. 1 ersichtlich sind Anbauteile in Form eines Zierrings 26 und eines Anschlusselements 27 ausgeführt. Das Anschlusselement 27 ist über entsprechende Rastmittel mit dem Schaltknaufkernstück 22 verrastet und verbindet eine Schaltmanschette 28 mit dem unteren Bereich des Schaltknaufkernstücks 22. Der Zierring 26 ist zwischen dem Flansch 22.1 des Schaltknaufkernstücks 22 und dem Anschlusselement 27 angeordnet und ebenfalls mit dem Schaltknaufkernstück 22 verrastet. Das Anschlusselement 27 kann dabei in Abhängigkeit von der gewählten Ausstattung notwendigerweise auch als 2-Komponenten-Teil ausgeführt werden.

In der Gebrauchsmusterschrift DE 201 08 566 U1 die den nächsten Stand der Technik darstellt wird ein Schaltgriff für einen Schalthebel eines Fahrzeuggetriebes beschrieben. Der beschriebene Schaltgriff umfasst einen Grundkörper aus Kunststoff und eine zumindest mit einem Teil ihrer Länge darin eingebettete im Wesentlichen rohrförmige Aufnahme für ein Freiende des Schalthebels. Der Grundkörper besteht aus einem ersten Kunststoffmaterial und eine im Spritzgussverfahren aufgebrachte Außenschicht besteht aus einem zweiten Kunststoffmaterial und weist eine Verbindung zur rohrförmigen Aufnahme auf.

In der Druckschrift GB 1 279 914 A wird ein Schaltgriff für einen Schalthebel eines Fahrzeuggetriebes beschrieben. Der beschriebene Schaltgriff umfasst einen Grundkörper aus Kunststoff und eine darin eingebettete im Wesentlichen rohrförmige elastische Gummiaufnahme für ein Freiende des Schalthebels. Der untere Bereich der elastischen Gummiaufnahme wird durch ein als Metallhülse ausgeführtes Anschlusselement eingefasst, um Kräfte aufzunehmen, die vom Schalthebel auf die Gummiaufnahme übertragen werden.

Aufgabe der Erfindung ist es, einen Schaltknauf für einen Schalthebel eines Fahrzeuggetriebes anzugeben, der eine Schallübertragung von der Schaltung über den Schalthebel und den Schaltknauf in den Fahrzeuginnenraum stärker dämpft.

Die Erfindung löst diese Aufgabe durch Bereitstellung eines Schaltknaufs für einen Schalthebel eines Fahrzeuggetriebes mit den Merkmalen der Patentanspruchs 1.

Vorteilhafte Ausführungsformen und Weiterbildungen der Erfindung sind in den abhängigen Ansprüchen angegeben.

Erfindungsgemäß ist in einem Schaltknauf für einen Schalthebel eines Fahrzeuggetriebes eine erste Weichkomponente so zwischen einem im Wesentlichen rohrförmigen Schaltknaufkernstück und einer Schaltknauftulpe angeordnet, dass das Schaltknaufkernstück akustisch vollständig von der Schaltknauftulpe entkoppelt ist. Zudem umfasst der Schaltknauf mindestens ein Anbauteil, das zur akustischen Entkopplung vom Schaltknaufkernstück über die Schaltknauftulpe mit dem Schaltknauf verbunden ist. Des Weiteren ist zwischen der Schaltknauftulpe und einer im Griffbereich des Schaltknaufes angeordneten Bezugsschicht eine zweite Weichkomponente angeordnet, die eine haptische Eigenschaft aufweist, die ein Benutzer als angenehm empfindet. Im Unterschied zum oben beschriebenen herkömmlichen Schaltknauf ist das mindestens eine Anbauteil nicht mit dem Schaltknaufkernstück sondern mit der akustisch über das erste Weichteil vom Schaltknaufkernstück entkoppelten Schaltknauftulpe verbunden. Dadurch sind alle an den Fahrzeuginnenraum angrenzenden Komponenten des erfindungsgemäßen Schaltknaufs von dem das Freiende des Schalthebels aufnehmenden Schaltknaufkernstück akustisch entkoppelt, so dass die Schallübertragung von der Schaltung über den Schalthebel und den Schaltknauf in den Fahrzeuginnenraum in vorteilhafter Weise stärker gedämpft wird.

In Ausgestaltung des erfindungsgemäßen Schaltknaufs können die erste Weichkomponente und die zweite Weichkomponente aus dem gleichen Material in einem Spritzvorgang gefertigt werden. Alternativ können für die beiden Bereiche verschiedene spezifisch abgestimmte Materialen verwendet werden, wobei dann mehrere Spritzvorgänge erforderlich sind. So kann für die erste Weichkomponente beispielsweise ein Material mit sehr guten akustischen Dämpfungseigenschaften verwendet werden, und für die zweite Weichkomponente kann ein Material mit sehr guten haptischen Eigenschaften verwendet werden. Die zweite Weichkomponente ist nach unten durch einen an den Außenumfang der Schaltknauftulpe angeformten Flansch begrenzt, der sich radial nach außen erstreckt, wobei die auf die zweite Weichkomponente aufgebrachte Bezugsschicht am Flansch befestigt ist.

In weiterer Ausgestaltung des erfindungsgemäßen Schaltknaufs ist das mindestens eine Anbauteil beispielsweise als Zierring und/oder als Anschlusselement ausgeführt. Das Anschlusselement verbindet eine Schaltmanschette so mit dem unteren Bereich der Schaltknauftulpe, dass kein direkter Kontakt zum Schaltknaufkernstück vorhanden ist. Das Anschlusselement weist beispielsweise erste Rastmittel auf, die zur Befestigung der Schaltmanschette mit entsprechenden im unteren Bereich der Schaltknauftulpe angeordneten zweiten Rastmitteln verrastet sind. Der Zierring ist vorzugsweise zwischen dem Flansch der Schaltknauftulpe und dem Anschlusselement angeordnet. Des Weiteren weist der Zierring beispielsweise dritte Rastmittel auf, die mit entsprechenden an der Schaltknauftulpe angeordneten vierten Rastmitteln verrastet sind.

Die Bezugsschicht ist beispielsweise als Lederbezug ausgeführt, der einerseits mit einer Unterfläche des Flansches der Schaltknauftulpe umlaufend verklebt ist und anderseits mit einer Innenfläche eines äußeren Kelchs der Schaltknauftulpe umlaufend verklebt ist. Insgesamt weist der erfindungsgemäße Schaltknauf eine hohe Torsionssteifigkeit bei Einbringen von Drehmomenten in den Schaltknauf und hohe Abzugskräfte auf, wobei keine Knarz- und Quitschgeräusche beim Aufbringen von Missbrauchskräften erzeugt werden und der erfindungsgemäße Schaltknauf dem Fahrer Solidität vermittelt. Da auch die Anbauteile wie der Zierring und/oder das Anschlusselement für die Schaltmanschette mit der Schaltknauftulpe verbunden sind, die vom Schaltknaufkernstück vollständig akustisch entkoppelt ist, findet im Schaltknauf eine vollständige akustische Trennung zur Dämpfung der Schallübertragung aus der Schaltung statt. Zudem kann durch die Verwendung des gleichen Materials als erste und zweite Weichkomponente eine Ausführung des Anschlusselements in 2-Komponenten-Technik vermieden werden, wodurch sich eine Kostenersparnis ergibt und ein Spritzvorgang eingespart werden kann, wobei die Dämpfungseigenschaften und die haptischen Eigenschaften beispielsweise durch Anpassen der Materialstärken der ersten und zweiten Weichkomponente verbessert werden können.

Vorteilhafte Ausführungsformen der Erfindung sind in den Zeichnungen dargestellt und werden nachfolgend beschrieben.

Dabei zeigen:
- Fig. 1: eine schematische Schnittdarstellung eines herkömmlichen Schaltknaufs für einen Schalthebel eines Fahrzeuggetriebes, und
- Fig. 2: eine schematische Schnittdarstellung eines erfindungsgemäßen Schaltknaufs für einen Schalthebel eines Fahrzeuggetriebes.

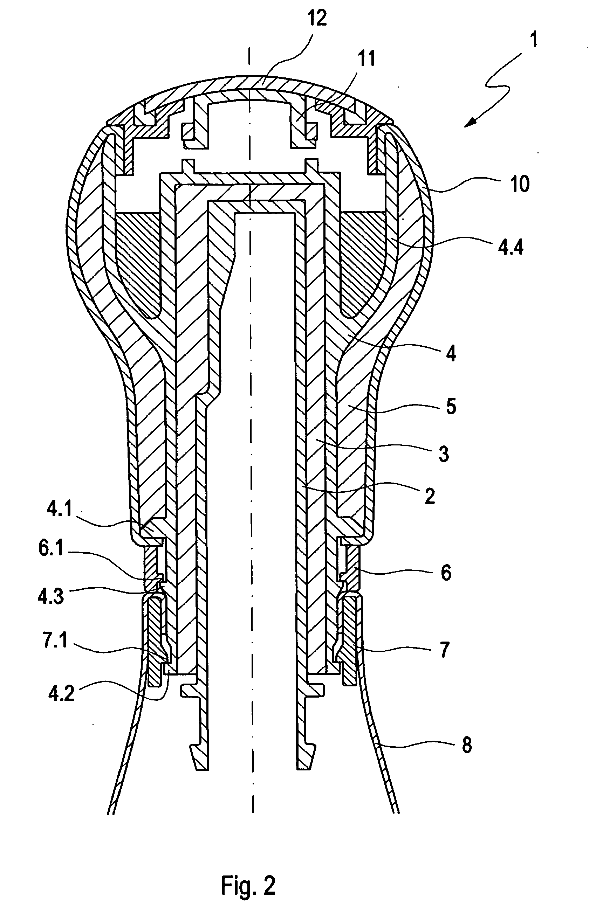

Wie aus Fig. 2 ersichtlich ist, umfasst ein erfindungsgemäßer Schaltknauf 1 für einen Schalthebel eines Fahrzeuggetriebes ein im Wesentlichen rohrförmiges Schaltknaufkernstück 2, das ein nicht dargestelltes Freiende des Schalthebels aufnimmt, und eine Schaltknauftulpe 4, die zur akustischen Entkopplung von dem Schaltknaufkernstück 2 durch eine erste Weichkomponente 3 über die gesamte Länge vom Schaltknaufkernstück 2 getrennt ist. Zwischen der Schaltknauftulpe 4 und einer im Griffbereich des Schaltknaufes 1 angeordneten Bezugsschicht 10, die beispielsweise als Lederbezug ausgeführt ist, ist eine zweite Weichkomponente 5 angeordnet, die haptische Eigenschaften aufweist, die ein Benutzer in der Regel als angenehm empfindet. Die erste Weichkomponente 3 und die zweite Weichkomponente 5 können in einem Spritzvorgang gefertigt werden. Alternativ können für die beiden Bereiche verschiedene spezifisch abgestimmte Materialen verwendet werden. So kann für die erste Weichkomponente 3 beispielsweise ein Material mit sehr guten akustischen Dämpfungseigenschaften verwendet werden, und für die zweite Weichkomponente kann ein Material mit sehr guten haptischen Eigenschaften verwendet werden. Die zweite Weichkomponente 5 ist nach unten durch einen an den Außenumfang der Schaltknauftulpe 4 angeformten Flansch 4.1 begrenzt, der sich radial nach außen erstreckt. Die auf die zweite Weichkomponente 5 aufgebrachte Bezugsschicht 10 ist einerseits mit einer Unterfläche des Flansches 4.1 der Schaltknauftulpe 4 und anderseits mit einer Innenfläche eines äußeren Kelchs 4.4 der Schaltknauftulpe 4 umlaufend verklebt.

Wie weiter aus Fig. 2 ersichtlich ist, ist ein erstes Anbauteil als Anschlusselement 7 ausgeführt, das eine Schaltmanschette 8 ohne Kontakt mit dem Schaltknaufkernstück 2 mit einem unteren Bereich der Schaltknauftulpe 4 verbindet. Die Schaltmanschette 8 dient zur Verkleidung des Schalthebels und verhindert, dass kleine Objekte in die Führungsgasse der Schaltstange gelangen können, die eine Bewegung der Schaltstange blockieren können. Das Anschlusselement 7 weist im dargestellten Ausführungsbeispiel erste Rastmittel 7.1 auf, die zur Befestigung der Schaltmanschette 8 mit entsprechenden im unteren Bereich der Schaltknauftulpe 4 angeordneten zweiten Rastmitteln 4.2 verrastet werden. Ein zweites Anbauteil ist als Zierring 6 ausgeführt, der zwischen dem Flansch 4.1 der Schaltknauftulpe 4 und dem Anschlusselement 7 angeordnet ist und die Verbindungsbereiche der Bezugsschicht 10 mit der Schaltknauftulpe 4 und der Schaltmanschette 8 mit der Schaltknauftulpe 4 verdeckt. Der Zierring 6 weist im dargestellten Ausführungsbeispiel dritte Rastmittel 6.1 auf, die mit entsprechenden an der Schaltknauftulpe 4 angeordneten vierten Rastmitteln 4.3 verrastet werden.

Nach oben ist der erfindungsgemäße Schaltknauf 1, analog zum herkömmlichen Schaltknauf 21 gemäß Fig. 1, durch eine eingesteckte Kappe 11 abgeschlossen, auf die ein Zierelement 12 aufgeklebt werden kann, das bündig mit dem äußeren Kelch 4.4 der Schaltknauftulpe 4 und der mit der Schaltknauftulpe 4 verklebten Bezugsschicht 10 abschließt.

Da die erste Weichkomponente 3 so zwischen dem Schaltknaufkernstück 2 und der Schaltknauftulpe 4 angeordnet ist, dass das Schaltknaufkernstück 2 akustisch vollständig von der Schaltknauftulpe 4 entkoppelt ist, und die Anbauteile 6, 7 so mit der Schaltknauftulpe 4 verbunden sind, dass kein direkter Kontakt mit dem Schaltknaufkernstück 2 vorhanden ist, sind auch die Anbauteile 6,7 akustisch vom Schaltknaufkernstück 2 entkoppelt und in den gedämpften Bereich mit einbezogen. Da somit alle an den Fahrzeuginnenraum angrenzenden Komponenten des erfindungsgemäßen Schaltknaufs 1 von dem das Freiende des Schalthebels aufnehmenden Schaltknaufkernstück 2 akustisch entkoppelt sind, wird die Schallübertragung von der Schaltung über den Schalthebel und den Schaltknauf 1 in den Fahrzeuginnenraum im Vergleich mit dem herkömmlichen Schaltknauf 21 in vorteilhafter Weise stärker gedämpft.

### BEZUGSZEICHENLISTE

- 1: Schaltknauf
- 2: Schaltknaufkernstück
- 3: erste Weichkomponente
- 4: Schaltknauftulpe
- 5: zweite Weichkomponente
- 6: Zierring
- 7: Anschlusselement
- 8: Schaltsack
- 10: Bezugskomponente
- 11: Schaltknaufkappe
- 12: Zierelement
- 21: Schaltknauf
- 22: Schaltknaufkernstück
- 23: erste Weichkomponente
- 24: Schaltknauftulpe
- 25: zweite Weichkomponente
- 26: Zierring
- 27: Anschlusselement
- 28: Schaltmanschette
- 30: Bezugsschicht
- 31: Kappe
- 32: Zierelement

## Patentansprüche

1. Schaltknauf für einen Schalthebel eines Fahrzeuggetriebes, der ein im Wesentlichen rohrförmiges Schaltknaufkernstück (2), das ein Freiende des Schalthebels aufnimmt, eine Schaltknauftulpe (4), die durch eine erste Weichkomponente (3) vom Schaltknaufkernstück (2) getrennt ist, und mindestens ein mit dem Schaltknauf (1) verbundenes Anbauteil (6, 7) aufweist, **dadurch gekennzeichnet, dass** die ersten Weichkomponente (3) so zwischen Schaltknaufkernstück (2) und der Schaltknauftulpe (4) angeordnet ist, dass das Schaltknaufkernstück (2) akustisch vollständig von der Schaltknauftulpe (4) entkoppelt ist, wobei das mindestens eine Anbauteil (6, 7) zur akustischen Entkopplung vom Schaltknaufkernstück (2) über die Schaltknauftulpe (4) mit dem Schaltknauf (1) verbunden ist, und wobei zwischen der Schaltknauftulpe (4) und einer im Griffbereich des Schaltknaufes (1) angeordneten Bezugsschicht (10) eine zweite Weichkomponente (5) angeordnet ist.

2. Schaltknauf nach Anspruch 1, **dadurch gekennzeichnet, dass** die erste Weichkomponente (3) und die zweite Weichkomponente (5) aus dem gleichen Material in einem Spritzvorgang gefertigt sind.

3. Schaltknauf nach Anspruch 1 oder 2, **dadurch gekennzeichnet, dass** die zweite Weichkomponente (5) nach unten durch einen an den Außenumfang der Schaltknauftulpe (4) angeformten Flansch (4.1) begrenzt ist, der sich radial nach außen erstreckt, wobei die auf die zweite Weichkomponente (5) aufgebrachte Bezugsschicht (10) am Flansch (4.1) befestigt ist.

4. Schaltknauf nach einem der Ansprüche 1 bis 3, **dadurch gekennzeichnet, dass** das mindestens eine Anbauteil als Zierring (6) und/oder als Anschlusselement (7) ausgeführt ist.

5. Schaltknauf nach Anspruch 4, **dadurch gekennzeichnet, dass** das Anschlusselement (7) ausgeführt ist, um eine Schaltmanschette (8) mit dem unteren Bereich der Schaltknauftulpe (4) zu verbinden.

6. Schaltknauf nach Anspruch 5, **dadurch gekennzeichnet, dass** das Anschlusselement (7) erste Rastmittel (7.1) aufweist, die zur Befestigung der Schaltmanschette (8) mit entsprechenden im unteren Bereich der Schaltknauftulpe (4) angeordneten zweiten Rastmitteln (4.2) verrastet sind.

7. Schaltknauf nach einem der Ansprüche 4 bis 6, **dadurch gekennzeichnet, dass** der Zierring (6) zwischen dem Flansch (4.1) der Schaltknauftulpe (4) und dem Anschlusselement (7) angeordnet ist.

8. Schaltknauf nach Anspruch 7, **dadurch gekennzeichnet, dass** der Zierring (6) dritte Rastmittel (6.1) aufweist, die mit entsprechenden an der Schaltknauftulpe (4) angeordneten vierten Rastmitteln (4.3) verrastet sind.

9. Schaltknauf nach einem der Ansprüche 1 bis 8, **dadurch gekennzeichnet, dass** die Bezugsschicht (10) als Lederbezug ausgeführt ist, der einerseits mit einer Unterfläche des Flansches (4.1) der Schaltknauftulpe (4) und anderseits mit einer Innenfläche eines äußeren Kelchs (4.4) der Schaltknauftulpe (3) umlaufend verklebt ist.

## Claims

1. Gearshift knob for a gearshift lever of a vehicle gearbox, which gearshift knob has a substantially tubular gearshift knob core piece (2) which receives a free end of the gearshift lever, a gearshift knob tulip (4) which is separated from the gearshift knob core piece (2) by a first soft component (3), and at least one attachment part (6, 7) which is connected to the gearshift knob (1), **characterized in that** the first soft component (3) is arranged between the gearshift knob core piece (2) and the gearshift knob tulip (4) such that the gearshift knob core piece (2) is acoustically fully decoupled from the gearshift knob tulip (4), wherein the at least one attachment part (6, 7), for acoustic decoupling from the gearshift knob core piece (2), is connected to the gearshift knob (1) via the gearshift knob tulip (4), and wherein a second soft component (5) is arranged between the gearshift knob tulip (4) and a lining layer (10) arranged in the grip region of the gearshift knob (1).

2. Gearshift knob according to Claim 1, **characterized in that** the first soft component (3) and the second soft component (5) are produced from the same material in one injection-moulding process.

3. Gearshift knob according to Claim 1 or 2, **characterized in that** the second soft component (5) is delimited in the downward direction by a flange (4.1) which is integrally formed on the outer circumference of the gearshift knob tulip (4) and which extends radially outwards, wherein the lining layer (10) applied to the second soft component (5) is fastened to the flange (4.1).

4. Gearshift knob according to one of Claims 1 to 3, **characterized in that** the at least one attachment component is formed as a decorative ring (6) and/or as a connecting element (7).

5. Gearshift knob according to Claim 4, **characterized in that** the connecting element (7) is designed to connect a gaiter (8) to the lower region of the gearshift knob tulip (4).

6. Gearshift knob according to Claim 5, **characterized in that** the connecting element (7) has first latching means (7.1) which, to fasten the gaiter (8), are latched to corresponding second latching means (4.2) arranged in the lower region of the gearshift knob tulip (4).

7. Gearshift knob according to one of Claims 4 to 6, **characterized in that** the decorative ring (6) is arranged between the flange (4.1) of the gearshift knob tulip (4) and the connecting element (7).

8. Gearshift knob according to Claim 7, **characterized in that** the decorative ring (6) has third latching means (6.1) which are latched to corresponding fourth latching means (4.3) arranged on the gearshift knob tulip (4).

9. Gearshift knob according to one of Claims 1 to 8, **characterized in that** the lining layer (10) is formed as a leather lining which is adhesively bonded in an encircling manner firstly to a lower surface of the flange (4.1) of the gearshift knob tulip (4) and secondly to an inner surface of an outer cup (4.4) of the gearshift knob tulip (4).

## Revendications

1. Pommeau pour un levier de changement de vitesse d'une boîte de vitesses de véhicule, qui présente un noyau de pommeau (2) essentiellement tubulaire, qui contient une extrémité libre du levier de changement de vitesse, une tulipe de pommeau (4), qui est séparée du noyau de pommeau (2) par un premier composant mou (3), et au moins une pièce rapportée (6, 7) assemblée au pommeau (1), **caractérisé en ce que** le premier composant mou (3) est disposé entre le noyau de pommeau (2) et la tulipe de pommeau (4) de telle manière que le noyau de pommeau (2) soit au niveau acoustique totalement dissocié de la tulipe de pommeau (4), dans lequel ladite au moins une pièce rapportée (6, 7) est assemblée au pommeau (1) par la tulipe de pommeau (4) pour le découplage acoustique du noyau de pommeau (2), et dans lequel un deuxième composant mou (5) est disposé entre la tulipe de pommeau (4) et une couche de revêtement (10) disposée dans la région de saisie du pommeau (1).

2. Pommeau selon la revendication 1, **caractérisé en ce que** le premier composant mou (3) et le deuxième composant mou (5) sont fabriqués dans la même matière par une opération d'injection.

3. Pommeau selon la revendication 1 ou 2, **caractérisé en ce que** le deuxième composant mou (5) est limité vers le bas par une bride (4.1) formée sur la périphérie extérieure de la tulipe de pommeau (4) et s'étendant radialement vers l'extérieur, dans lequel la couche de revêtement (10) déposée sur le deuxième composant mou (5) est fixée à la bride (4.1).

4. Pommeau selon l'une quelconque des revendications 1 à 3, **caractérisé en ce que** ladite au moins une pièce rapportée est réalisée sous la forme d'une bague décorative (6) et/ou d'un élément de liaison (7).

5. Pommeau selon la revendication 4, **caractérisé en ce que** l'élément de liaison (7) est réalisé de façon à relier une manchette de changement de vitesse (8) à la région inférieure de la tulipe de pommeau (4).

6. Pommeau selon la revendication 5, **caractérisé en ce que** l'élément de liaison (7) présente des premiers moyens d'encliquetage (7.1), qui sont encliquetés avec des deuxièmes moyens d'encliquetage correspondants (4.2) disposés dans la région inférieure de la tulipe de pommeau (4) pour la fixation de la manchette de changement de vitesse (8).

7. Pommeau selon l'une quelconque des revendications 4 à 6, **caractérisé en ce que** la bague décorative (6) est disposée entre la bride (4.1) de la tulipe de pommeau (4) et l'élément de liaison (7).

8. Pommeau selon la revendication 7, **caractérisé en ce que** la bague décorative (6) présente des troisièmes moyens d'encliquetage (6.1), qui sont encliquetés avec des quatrièmes moyens d'encliquetage correspondants (4.3) disposés sur la tulipe de pommeau (4).

9. Pommeau selon l'une quelconque des revendications 1 à 8, **caractérisé en ce que** la couche de revêtement (10) est réalisée sous la forme d'une housse de cuir, qui est collée en périphérie d'une part avec la face inférieure de la bride (4.1) de la tulipe de pommeau (4) et d'autre part avec une face intérieure d'un gobelet extérieur (4.4) de la tulipe de pommeau (4).
